# FASCICULE DE BREVET EUROPEEN

(11) **EP 2 459 445 B1**
(45) Date de publication et mention de la délivrance du brevet: **11.12.2013**
(21) Numéro de dépôt: 10762952.9
(22) Date de dépôt: 29.07.2010
(51) Int. Cl.: F02K 1/70, B64D 27/18, B64D 27/26, B64D 29/00

(54) **ENSEMBLE MOTEUR POUR AERONEF DONT LE MAT D'ACCROCHAGE COMPREND UNE ENVELOPPE STRUCTURALE FORMANT DELIMITATION RADIALE INTERNE DU FLUX SECONDAIRE**
MOTORBAUGRUPPE FÜR EIN FLUGZEUG MIT EINER ANBRINGUNGSSTREBE MIT EINEM STRUKTURELLEN GEHÄUSE ZUR FORMUNG EINER INTERNEN RADIALEN BEGRENZUNG DES SEKUNDÄRFLUSSES
ENGINE ASSEMBLY FOR AN AIRCRAFT OF WHICH THE ATTACHMENT STRUT COMPRISES A STRUCTURAL CASE FORMING AN INTERNAL RADIAL DELIMITATION OF THE SECONDARY FLOW

(30) Priorité: 31.07.2009 FR 0955425
(43) Date de publication de la demande: 06.06.2012
(73) Titulaire: Airbus Operations, 31060 Toulouse (FR)
(72) Inventeur: LAFONT, Laurent, 31320 Pechbusque (FR)
(74) Mandataire: Ilgart, Jean-Christophe
(86) Numéro de dépôt international: PCT/FR2010/051617
(87) Numéro de publication internationale: WO 2011/012822

(56) Documents cités:
- EP-A2- 1 568 868
- WO-A1-2008/000924
- US-A- 4 683 717
- US-A- 4 785 625
- US-A- 5 226 288

## Description

### DOMAINE TECHNIQUE

La présente invention se rapporte de façon générale au domaine des mâts d'accrochage de turbomachine à double flux pour aéronef, en particulier pour des turboréacteurs à double flux.

### ETAT DE LA TECHNIQUE ANTERIEURE

De l'art antérieur, il est connu diverses conceptions de mâts d'accrochage de turboréacteurs à double flux, notamment du document EP-A-1 883 578.

Dans ce document, la structure primaire de passage d'efforts du mât est réalisée à partir d'un caisson central, de part et d'autre duquel s'étendent deux caissons latéraux, le tout formant sensiblement une demi-enveloppe située dans la continuité aval d'un carter de soufflante, et centrée sur l'axe moteur. De plus, la surface intérieure de cette demi-enveloppe participe à la délimitation radiale externe d'un passage pour un flux secondaire du turboréacteur. Par conséquent, la structure primaire du mât s'étend radialement vers l'extérieur à une distance importante de l'axe moteur, ce qui rend sa conception relativement lourde et encombrante, donc coûteuse.

En outre, elle fait saillie radialement vers l'extérieur et vers le haut par rapport au carter de soufflante, sur une longueur radiale conséquente. De ce fait, la conservation d'une garde au sol suffisante peut conduire le mât à se situer en partie au-delà de la ligne de crête définie par l'aile sur laquelle il est rapporté. Cela se traduit par des pertes aérodynamiques non-négligeables, et donc des performances globales diminuées.
Un autre exemple de l'art antérieur est fourni par le document US 5,226,288 A1.

### EXPOSE DE L'INVENTION

L'invention a donc pour but de remédier au moins partiellement aux inconvénients mentionnés ci-dessus, relatifs aux réalisations de l'art antérieur.

Pour ce faire, selon la revendication 1, l'invention a tout d'abord pour objet un ensemble moteur pour aéronef comprenant une turbomachine à double flux et un mât d'accrochage de ladite turbomachine destiné à être raccordé à un élément de l'aéronef, la turbomachine comprenant un carter de soufflante ainsi qu'un carter intermédiaire agencé en aval du carter de soufflante et comprenant un moyeu portant des bras structuraux, et le mât d'accrochage comprenant une structure primaire de passage d'efforts.

Selon l'invention, ladite turbomachine comprend une première enveloppe structurale s'étendant vers l'aval à partir du moyeu dudit carter intermédiaire, cette enveloppe participant à la délimitation radiale interne d'un passage pour un flux secondaire de la turbomachine.

De plus, ladite structure primaire du mât d'accrochage comprend une seconde enveloppe structurale, montée sur ladite première enveloppe structurale et agencée dans la continuité aval de celle-ci afin de participer également à la délimitation radiale interne du passage pour le flux secondaire, ladite structure primaire du mât d'accrochage comprenant en outre une structure de déport agencée dans le passage pour le flux secondaire, et destinée à relier ladite seconde enveloppe structurale audit élément de l'aéronef. De plus, ladite seconde enveloppe structurale intègre un système d'inversion de poussée.

L'invention est remarquable en ce qu'elle prévoit une structure primaire de mat d'accrochage intégrant une enveloppe structurale située au plus prêt de l'axe moteur. Son encombrement ainsi que sa masse globale s'en trouvent avantageusement diminués. En outre, avec la fixation entre les deux enveloppes structurales s'étendant chacune tout autour de l'axe moteur, la reprise du moment s'exerçant selon la direction transversale de la turbomachine peut être assurée de manière extrêmement satisfaisante, réduisant ainsi fortement la flexion de la turbomachine selon cette direction.

En outre, dans le cas où la turbomachine est destinée à être montée sous une aile de l'aéronef, un autre avantage réside dans le fait de pouvoir installer le mât sur l'aile sans qu'il n'atteigne la ligne de crête définie par cette dernière, et en conservant une garde au sol suffisante sous la turbomachine, toujours en raison de l'implantation de la seconde enveloppe structurale au plus prêt de l'axe moteur.

Enfin, l'intégration d'un système d'inversion de poussée dans la seconde enveloppe structurale permet d'obtenir un ensemble moteur compact et performant.

De préférence, une jonction entre les première et seconde enveloppes structurales se trouve en aval d'une chambre de combustion de la turbomachine. Cela traduit une position reculée de la structure primaire du mât, contrastant avec les réalisations antérieures. De plus, cette disposition permet de ne pas gêner l'accès généralement requis aux équipements situés en amont de la chambre de combustion, dite zone « core ». Enfin, la structure primaire ne se situant pas au droit de la chambre de combustion, elle ne risque pas d'être dégradée par une éventuelle flamme susceptible de se dégager de celle-ci.

De préférence, une extrémité aval de ladite seconde enveloppe se trouve à proximité d'une jonction entre un carter de générateur de gaz de la turbomachine, et un carter d'éjection des gaz de celle-ci.

Il en découle une longueur axiale très faible de la seconde enveloppe du mât d'accrochage, générant un faible encombrement.

De préférence, ladite première et/ou seconde enveloppe structurale est reliée à un carter de générateur de gaz de la turbomachine à l'aide d'une pluralité de bielles réparties circonférentiellement et agencées sensiblement tangentiellement vis-à-vis dudit carter de générateur de gaz.

Toujours de manière préférentielle, une solution alternative ou combinée à la précédente réside dans le fait de prévoir ladite seconde enveloppe structurale reliée à un carter de générateur de gaz de la turbomachine, et/ou un carter d'éjection des gaz de celle-ci, par une pluralité de systèmes à ressort précontraint répartis circonférentiellement.

De préférence, ladite première enveloppe structurale est trouée par des portes d'accès recouvertes par un ou plusieurs volets.

L'invention a également pour objet un aéronef comprenant au moins un ensemble moteur tel que décrit ci-dessus, avec ledit élément sur lequel est raccordé le mât d'accrochage de l'ensemble moteur étant préférentiellement l'une de ses ailes, ou une partie arrière de son fuselage.

Enfin, selon la revendication 9, l'invention se rapporte également à un procédé de montage de ensemble moteur décrit ci-dessus, ledit procédé comprenant les étapes consistant a :
- installer, de manière amovible, des moyens de guidage sur la seconde enveloppe structurale ;
- déplacer la turbomachine à double flux selon la direction de son axe, en direction de la seconde enveloppe structurale, de manière à ce que sa première enveloppe soit guidée par lesdits moyens de guidage ; et
- retirer lesdits movens de guidage de la seconde enveloppe structurale.

La particularité réside donc ici dans la mise en place de moyens de guidage amovibles sur la seconde enveloppe du mât, permettant de centrer la turbomachine par rapport à cette même enveloppe à travers laquelle cette turbomachine est destinée à pénétrer.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue en demi-coupe longitudinale d'un ensemble moteur pour aéronef selon un mode de réalisation préféré de la présente invention, suspendu sous une aile d'aéronef ;
- les figures 2a et 2b montrent deux vues en perspective de la structure primaire de passage d'efforts du mât d'accrochage appartenant à l'ensemble moteur montré sur la figure 1, prises selon deux angles de vue distincts ;
- les figures 3a et 3b montrent deux vues en perspective de la première enveloppe structurale équipant la turbomachine appartenant à l'ensemble moteur montré sur la figure 1, prises selon deux angles de vue distincts ;
- les figures 4 et 5 représentent des vues schématiques en coupe prises le long des lignes IV-IV et V-V de la figure 1, respectivement ;
- la figure 6 représente une vue similaire à celle de la figure 2b, plus détaillée, montrant en particulier le système d'inversion de poussée équipant la structure primaire de passage d'efforts ;
- la figure 7 représente une vue similaire à celle de la figure 1, plus détaillée, montrant en particulier le système d'inversion de poussée équipant la structure primaire de passage d'efforts ;
- la figure 8 représente une vue schématique d'un outillage permettant l'assemblage de la turbomachine sur le mât d'accrochage ;
- la figure 9 représente une vue en coupe dont la partie de gauche a été prise le long de la ligne IXa-IXa de la figure 8, et dont la partie de droite a été prise le long de la ligne IXb-IXb de cette figure 8 ; et
- la figure 10 représente une vue en coupe prise le long de la ligne X-X de la figure 8.

### EXPOSÉ DÉTAILLÉ DE MODES DE RÉALISATION PRÉFÉRÉS

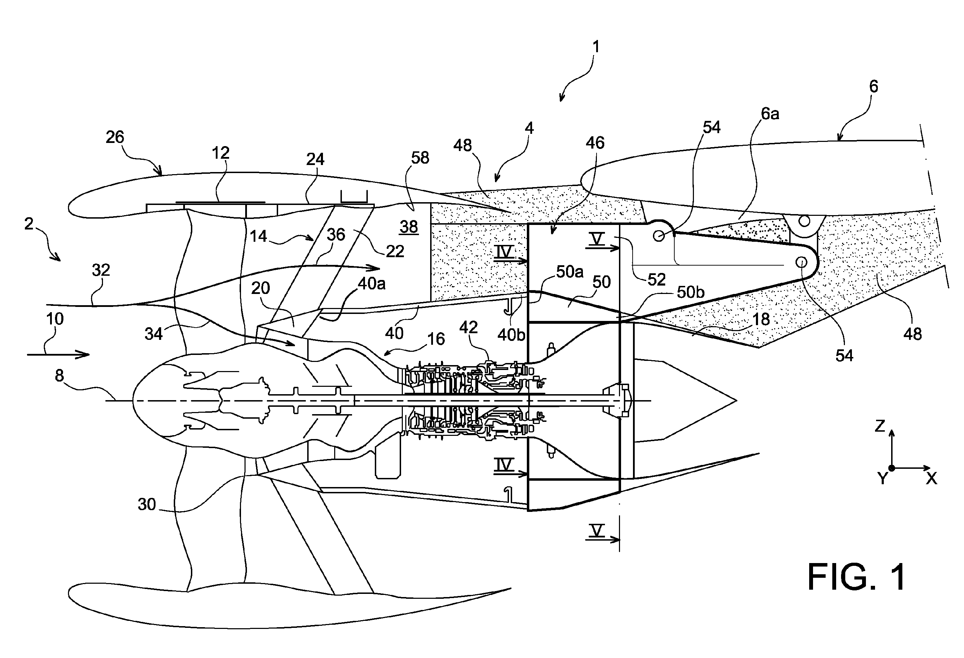

En référence à la figure 1, on peut apercevoir un ensemble moteur 1 pour aéronef, selon un mode de réalisation préféré de la présente invention.

Cet ensemble 1 comprend globalement une turbomachine à double flux, ici préférentiellement un turboréacteur 2, et un mât d'accrochage 4 permettant d'assurer la suspension du turboréacteur sous une aile 6 d'aéronef.

Dans toute la description qui va suivre, par convention, on appelle X la direction longitudinale du turboréacteur, qui est parallèle à un axe longitudinal 8 de ce dernier, et également dénommé axe moteur. D'autre part, on appelle Y la direction orientée transversalement par rapport au turboréacteur, et Z la direction verticale ou de la hauteur, ces trois directions X, Y et Z étant orthogonales entre-elles.

D'autre part, les termes « amont » et « aval » sont à considérer par rapport à une direction principale d'écoulement des gaz au sein du turboréacteur, cette direction étant représentée schématiquement par la flèche 10.

Sur la figure 1, on peut apercevoir que le turboréacteur 2 comporte une pluralité de carters rapportés fixement les uns aux autres, à savoir, successivement de l'amont vers l'aval, un carter de soufflante 12, un carter intermédiaire 14, un carter central également dénommé carter de générateur de gaz 16, puis un carter d'éjection des gaz 18. Pour ce qui concerne le carter intermédiaire, celui-ci présente un moyeu 20 centré sur l'axe 8, à partir duquel s'étendent radialement des bras 22 portant une virole extérieure 24 de ce carter 14. La virole 24 se situe dans la continuité aval du carter de soufflante 12 auquel elle est rapportée, et une nacelle 26 du turboréacteur vient entourer ces deux éléments 12, 24.

Le moyeu 20 se trouve en aval d'un bec de séparation des flux 30, servant à dissocier le flux 32 entrant dans la soufflante en un flux primaire 34 traversant le générateur des gaz, et un flux secondaire 36 destiné à emprunter un passage annulaire 38 prévu à cet effet, également dénommé canal annulaire secondaire.

Outre les différents carters mentionnés ci-dessus, dont certains peuvent être réalisés ensemble d'une seule pièce, le turboréacteur comprend une première enveloppe structurale 40 s'étendant vers l'aval à partir du moyeu 20, sensiblement selon la direction X en étant centrée sur l'axe 8. Son extrémité aval 40b se trouve de préférence agencée juste en aval de la chambre de combustion 42 du turboréacteur, dans un plan transversal. Son extrémité amont 40a, également annulaire, est rapportée de façon boulonnée sur le moyeu, avec une pluralité de boulons (non représentés) répartis circonférentiellement. Le nombre important de boulons espacés les uns des autres sur l'extrémité amont 40a permet d'éviter au mieux les effets néfastes d'ovalisation de l'enveloppe 40, durant le fonctionnement du turboréacteur.

Pour ce qui concerne le mât d'accrochage 4, celui-ci dispose d'une structure primaire de passage d'efforts 46, également dénommée structure rigide, ainsi que des structures secondaires 48 servant essentiellement au logement des équipements ainsi qu'à former des structures aérodynamiques faisant la jonction entre l'aile 6 et le turboréacteur 2. Ici, on peut voir que la structure primaire 46 comprend une seconde enveloppe structurale 50, également centrée sur l'axe 8 et montée fixement sur l'extrémité aval 40b de la première enveloppe 40. Ainsi, comme mentionné ci-dessus, la jonction entre les première et seconde enveloppes 40, 50 se trouve en aval de la chambre de combustion 42, et de préférence dans un plan transversal situé juste en sortie de celle-ci, comme cela a été représenté. En outre, la structure primaire 46 comporte une structure de déport 52 s'étendant selon la direction Z à partir de l'enveloppe 50, et également dans la direction X vers l'arrière comme cela a été schématisé sur la figure 1. On peut en effet voir que cette structure 52 dispose en partie arrière de moyens 54 permettant le montage de la structure primaire 46 sur la partie structurale 6a de l'aile 6.

Dans cet ensemble moteur 1, le passage 38 du flux secondaire 36 est délimité dans la direction radiale externe par une surface interne 58 de la nacelle 26. En outre, la délimitation radiale interne de ce passage 38 est assurée tout d'abord par le moyeu 20 du carter intermédiaire 14, puis par la surface extérieure de l'enveloppe structurale 40 renfermant une partie du carter de générateur de gaz 16, et enfin par la surface extérieure de l'enveloppe structurale 50 située dans la continuité de la première enveloppe 40. Ainsi, la structure de déport 52 s'étend verticalement à travers le passage 38 du flux secondaire, de même que les structures secondaires 48 du mât d'accrochage 4.

Comme visible sur la figure 1, l'extrémité aval 50b de l'enveloppe structurale 50 se trouve à proximité d'une jonction entre le carter de générateur des gaz 16 et le carter d'éjection 18. Par conséquent, la seconde enveloppe structurale 50 du mât d'accrochage ne s'étend que sur une portion axiale relativement limitée, entre la chambre de combustion et le carter d'éjection des gaz 18. Pour des raisons de montage de la turbomachine sur l'enveloppe 50, la surface intérieure de celle-ci présente un diamètre supérieur au diamètre le plus grand de la portion de la turbomachine l se trouvant au niveau de la jonction entre le carter de générateur des gaz 16 et le carter d'éjection 18.

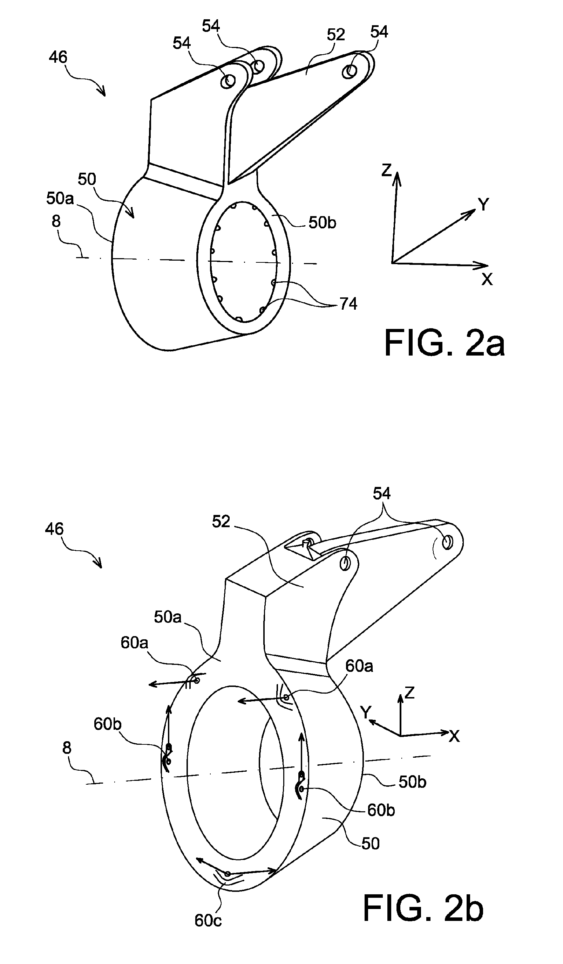

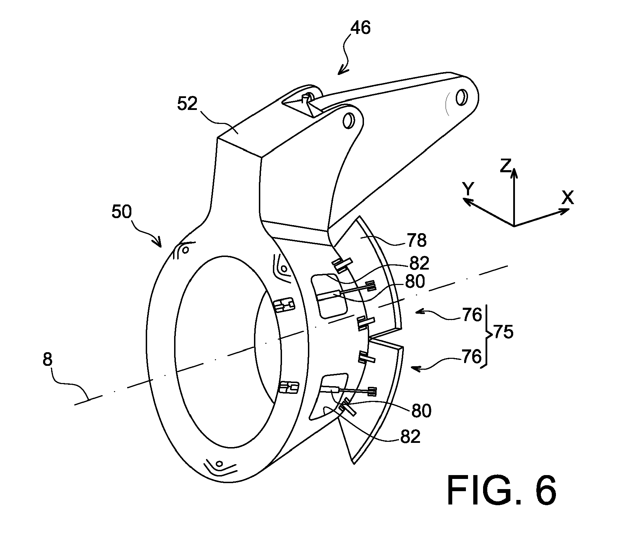

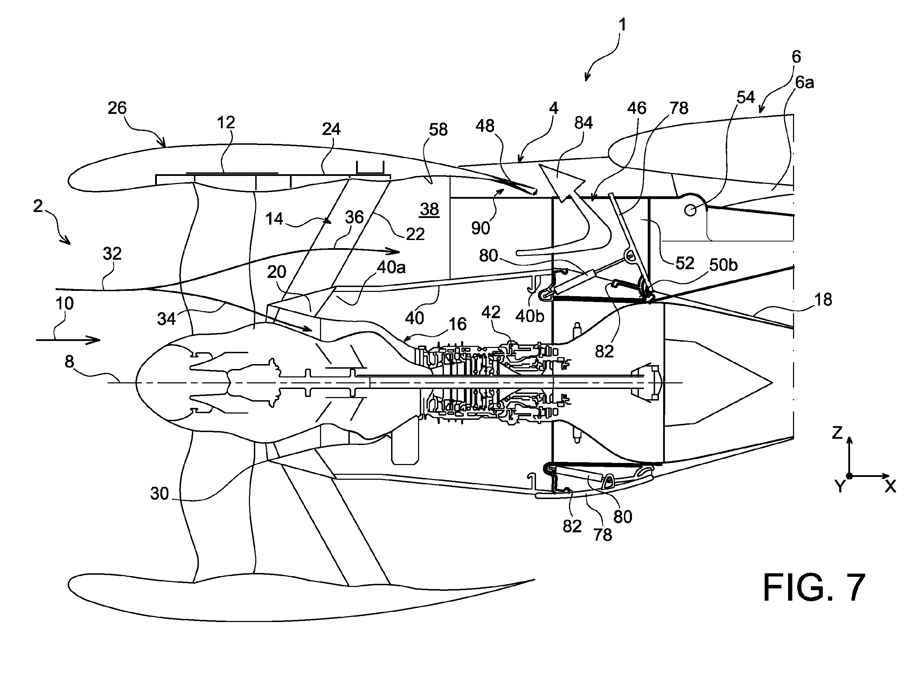

En référence à présent aux figures 2a et 2b, on peut apercevoir la structure primaire 46 du mât d'accrochage. Celle-ci peut être réalisée d'une seule pièce, ou bien à l'aide d'éléments rapportés fixement les uns sur les autres. Quoi qu'il en soit, l'enveloppe structurale 50 forme bien une structure sensiblement annulaire et continue tout autour de l'axe moteur 8, à travers laquelle l'extrémité aval du carter de générateur des gaz 16 est destinée à pénétrer. Elle est également équipée d'un système d'inversion de poussée, qui n'a pas été représenté sur les figures 1, 2a et 2b, mais seulement sur les figures 6 et 7.

Sur l'extrémité avant 50a de cette enveloppe 50, il est prévu des moyens d'accrochage destinés à coopérer avec des moyens d'accrochage complémentaires de l'extrémité aval de la première enveloppe structurale. Ces moyens d'accrochage comprennent par exemple deux attaches supérieures 60a disposées de part et d'autre d'un plan vertical médian (non représenté), chacune destinée à reprendre des efforts s'exerçant selon la direction X uniquement. Ils peuvent également comprendre deux attaches intermédiaires 60b, disposées de part et d'autre du plan vertical médian précité, et également traversé par un plan diamétral de cette enveloppe. Chacune d'elle est ici destinée à reprendre uniquement des efforts s'exerçant selon la direction Z. Enfin, ces moyens comprennent une attache inférieure 60c traversée par le plan vertical médian, et destinée à reprendre les efforts s'exerçant selon la direction X et selon la direction Y, mais pas selon la direction Z. Cela permet d'obtenir des moyens de montage, sur la première enveloppe structurale, qui forment un système de montage isostatique.

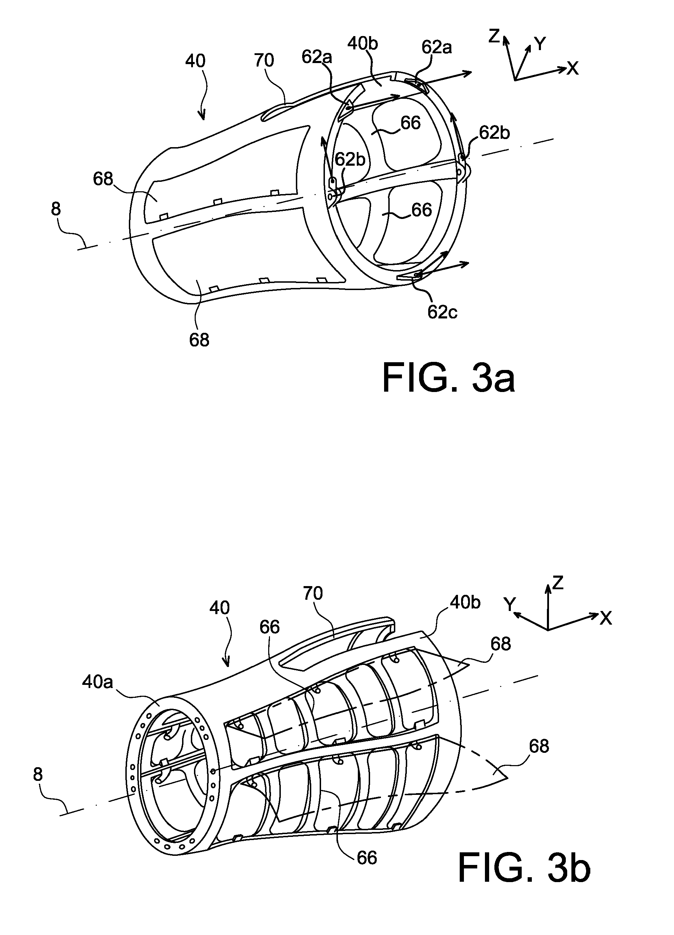

En référence à présent aux figures 3a et 3b, on peut voir la première enveloppe structurale 40, de préférence également réalisée d'un seul tenant, ou bien encore obtenue à partir de la fixation entre elles d'une pluralité d'éléments. Sur l'extrémité aval 40b de cette enveloppe, on peut voir les attaches complémentaires 62a, 62b et 62c destinées à être montées sur les attaches 60a, 60b, 60c leur étant situées en regard, respectivement.

En outre, on peut apercevoir que la structure 40 est trouée par des portes d'accès 66 destinées à permettre l'accès au carter de générateur des gaz du turboréacteur, ces portes 66 étant fermées par des volets mobiles 68 articulés sur cette même structure 40. Ainsi, en position fermée telle que montrée sur la figure 3a, les volets situés extérieurement recouvrent les portes 66 et participent donc à la délimitation radiale interne du flux secondaire du turboréacteur. En revanche, lorsque des opérations de manutention doivent être réalisées sur le moteur, les volets peuvent être pivotés de la manière schématique montrée sur la figure 3b, afin de libérer les portes 66, et donc permettre l'accès à l'espace intérieur délimité par cette structure 40.

Enfin, comme cela a été schématisé sur les figures 3a et 3b, l'enveloppe 40 peut présenter une fente 70 ouverte vers le haut et vers l'arrière afin de permettre le passage des structures secondaires 48 du mât d'accrochage.

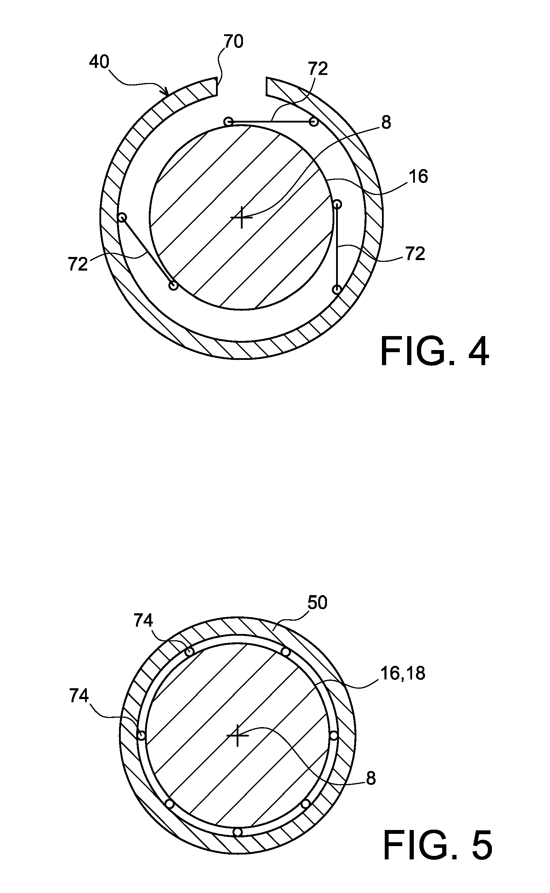

Bien que cela n'ait pas été représenté sur la figure 1, il est prévu que la première enveloppe structurale 40 soit reliée au carter de générateur de gaz 16 à l'aide d'une pluralité de bielles 72 réparties circonférentiellement de manière régulière, par exemple au nombre de trois comme montré sur la figure 4. De façon générale, cette disposition où les bielles sont articulées à chacune de leurs extrémités permet de faire face au phénomène de dilatation thermique différentiel entre le carter 16 et la structure 40. Cette jonction par les bielles 72 peut alternativement être réalisée sur l'extrémité amont 50a de la seconde enveloppe structurale 50.

Alternativement ou simultanément, l'extrémité aval 50b de l'enveloppe structurale 50 peut être reliée au carter d'éjection des gaz 18 ou au carter de générateur des gaz 16, ou encore à la jonction entre ceux-ci, par l'intermédiaire de systèmes 74 répartis circonférentiellement de manière régulière autour de l'axe 8. Ces systèmes 74, montrés sur la figure 5, comprennent des ressorts précontraints permettant d'absorber les mouvements relatifs entre ces deux éléments 50, 18 entre lesquels ils sont agencés.

En référence à présent à la figure 6, on peut apercevoir la structure primaire 46 du mât d'accrochage de manière plus détaillée. Celle-ci intègre en effet un système d'inversion de poussée, ici basé sur une conception dite à volet mobile articulé. D'autres conceptions de systèmes d'inversion de poussée peuvent néanmoins être envisagées, sans sortir du cadre de l'invention.

Ainsi, le système d'inversion de poussée 75 comprend une pluralité d'ensembles 76 intégrant chacun un volet 78 dont l'extrémité arrière est articulée sur l'enveloppe 50. En fonctionnement normal du turboréacteur, les volets 78 sont destinés à être plaqués contre la surface extérieure de l'enveloppe structurale 50, de manière à former avec celle-ci la délimitation radiale interne du passage pour le flux secondaire. Cette position est montrée sur la partie inférieure de la figure 7, où l'on voit que les volets 78 sont articulés au niveau de l'extrémité aval 50b de l'enveloppe 50. De plus, dans cette configuration de fonctionnement normale du turboréacteur, chaque volet 78 présente une extrémité avant qui recouvre de préférence la jonction entre les deux enveloppes structurales 40, 50.

Pour assurer le déploiement du volet 78, chaque ensemble 76 comprend des moyens d'actionnement du type vérin 80 traversant une ouverture 82 qui est recouverte par le volet 78 en position rabattue. Ainsi, lorsque le vérin 80 se déploie suite à une commande d'activation du système d'inversion de poussée, le volet 78 pivote autour de son axe de rotation et vient progressivement se déployer dans le passage 38 du flux secondaire. Naturellement, le déploiement de tous les volets 78, répartis circonférentiellement autour de l'axe 8, s'opère de manière simultanée.

Une fois l'ensemble des volets 78 déployés tel que cela est montré sur la partie supérieure de la figure 7, le flux secondaire 36 circulant à travers le passage 38 impacte cette barrière radiale formée par l'ensemble des volets 78 déployés, et se retrouve donc renvoyé à contre courant radialement vers l'extérieur, comme montré schématiquement par la flèche 84. Dans la configuration représentée, l'air passe entre le bord d'attaque de l'aile 6 et une extrémité arrière de nacelle 26 carénant le carter de soufflante 12 et la virole extérieure 24 du carter intermédiaire 14.

À cet égard, cette extrémité aval de la nacelle 26 se présente sous la forme d'un bec annulaire 90 participant à la délimitation radiale externe du passage 38, et dont le but est de pouvoir, en fonction de sa position, modifier l'étendue de la section de sortie du passage annulaire 38. Le bec est donc déplaçable entre une position de grande section de sortie du passage 38, telle que montrée sur la partie inférieure de la figure 7, et une position de plus faible section de sortie du passage 38, telle que montrée sur la partie supérieure de cette même figure. Dans l'exemple montré, ce bec 90 peut être réalisé de manière sectorisée, à savoir formé par une pluralité de secteurs disposés dans la continuité les uns des autres, dans la direction circonférentielle.

Avec cette configuration, on prévoit de déplacer le bec 90 dans la position la plus favorable possible lorsque le turboréacteur fonctionne en mode inversion de poussée avec les volets 78 déployés, tel que cela est montré sur la partie supérieure de la figure 7.

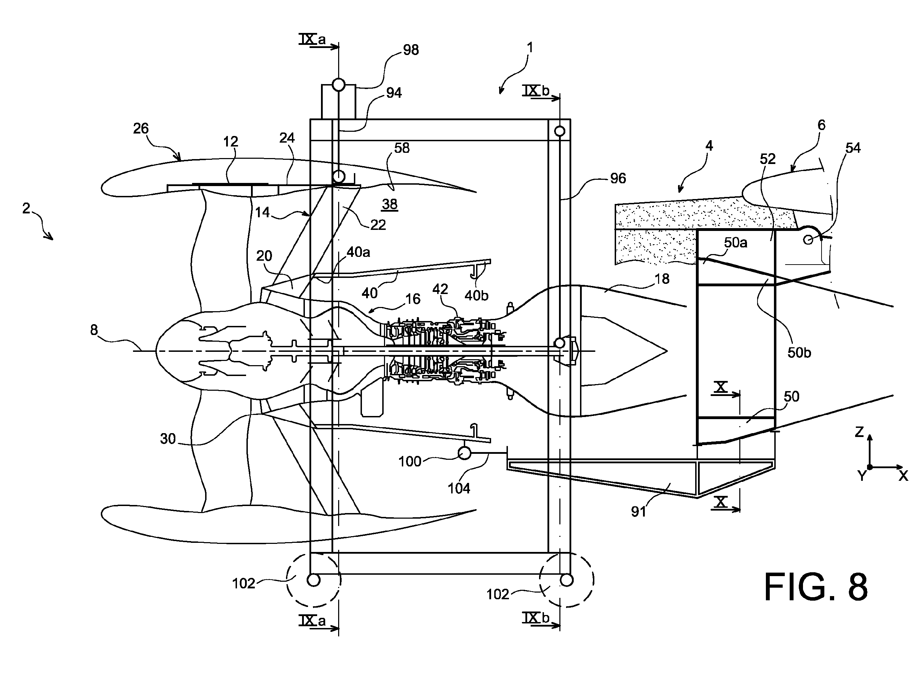

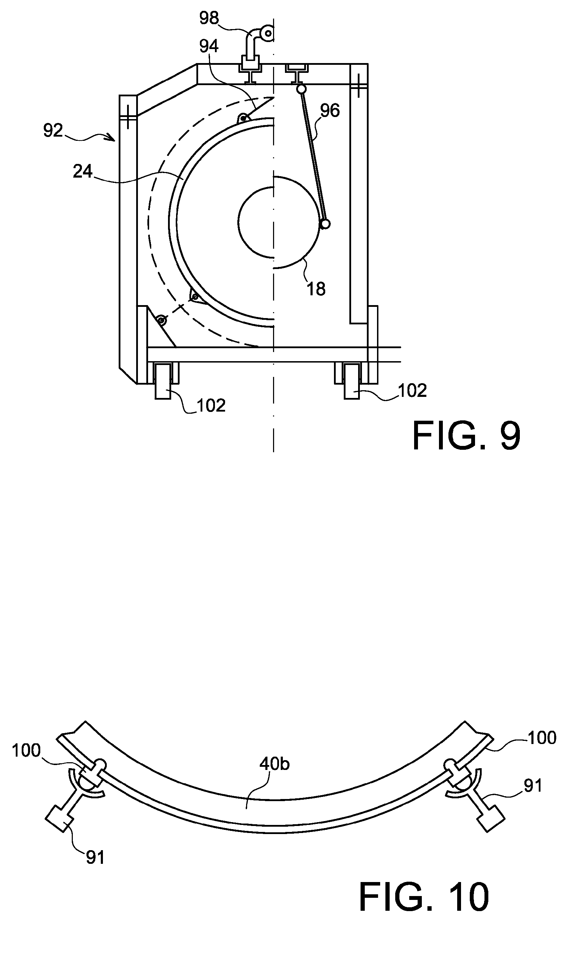

En référence aux figures 8 à 10, il est montré une façon préférée d'installer le turboréacteur 2 sur le mât d'accrochage 4. Pour ce faire, le mât d'accrochage 4 est tout d'abord mis en place sur l'aile 6, de manière à faire saillie en dessous de celle-ci. D'autre part, plusieurs rails de guidage 91 sont montés de manière amovible sur la seconde enveloppe structurale 50, par exemple deux rails 90 agencés dans des positions angulaires correspondant à 4 heures et 8 heures. Ces rails 91 sont agencés de manière à présenter des pistes de roulement orientées sensiblement selon la direction X. En outre, le turboréacteur 2 muni de sa nacelle 26 est monté de manière suspendue sur un châssis roulant 92. Pour ce faire, il est prévu que la virole extérieure 24 du carter intermédiaire 14 soit suspendue à l'aide de deux câbles 94, et le carter d'éjection 18 suspendu à l'aide de deux câbles 96. Ces suspensions sont reliées à un mécanisme de mise en mouvement 98 monté sur le châssis 92, permettant d'ajuster la position du turboréacteur 2 selon chacune des directions X, Y et Z par rapport à ce châssis 92. De plus, deux systèmes de roulement 100 sont reliés de manière amovible à l'extrémité aval 40b de la première enveloppe 40, également à des positions angulaires correspondant à 4 heures et 8 heures, de manière à pouvoir coopérer avec les deux rails 90 prévus à cet effet.

Ainsi, le turboréacteur 2 suspendu au châssis 92 est déplacé selon la direction X par rapport au mât d'accrochage 4 restant fixe, par déplacement du châssis 92 monté sur roue 102. Chaque moyen de roulement 100 peut être équipé d'un système de visière mécanique 104 se projetant vers l'avant, et permettant de s'assurer que chaque roulement 100 se situe dans l'axe de son rail 91 associé, de manière à pouvoir rouler sur celui-ci. Une fois que cette condition est satisfaite, le chariot peut continuer à être déplacé selon la direction X de manière à établir la coopération entre les roulements 100 et leurs rails associés 91, puis le déplacement poursuivi jusqu'à ce que le carter d'éjection 18 pénètre au sein de l'espace intérieur défini par la seconde enveloppe structurale 50. Une fois la position relative entre le turboréacteur 2 et le mât d'accrochage 4 établie, la connexion mécanique est réalisée entre l'extrémité amont 50a de l'enveloppe 50 et l'extrémité aval 40b de l'enveloppe 40, qui constitue de préférence l'unique raccordement mécanique entre la structure rigide 46 du mât d'accrochage et le turboréacteur 2. Ensuite, le turboréacteur 2 monté fixement sous l'aile 6 par le mât d'accrochage 4 peut être désolidarisé du châssis 92 de l'outillage, et les rails 91 retirés de la seconde enveloppe 50.

Bien entendu, diverses modifications peuvent être apportées par l'homme du métier à l'invention qui vient d'être décrite, uniquement à titre d'exemples non limitatifs.

## Revendications

1. Ensemble moteur (1) pour aéronef comprenant une turbomachine à double flux (2) et un mât d'accrochage (4) de ladite turbomachine destiné à être raccordé à un élément (6) de l'aéronef, la turbomachine comprenant un carter de soufflante (12) ainsi qu'un carter intermédiaire (14) agencé en aval du carter de soufflante et comprenant un moyeu (20) portant des bras structuraux (22), et le mât d'accrochage comprenant une structure primaire (46) de passage d'efforts,
ladite turbomachine comprenant une première enveloppe structurale (40) s'étendant vers l'aval à partir dudit moyeu (20) du carter intermédiaire, cette enveloppe (40) participant à la délimitation radiale interne d'un passage (38) pour un flux secondaire (36) de la turbomachine,
ladite structure primaire (46) du mât d'accrochage comprenant une seconde enveloppe structurale (50), montée sur ladite première enveloppe structurale (40) et agencée dans la continuité aval de celle-ci afin de participer également à la délimitation radiale interne du passage (38) pour le flux secondaire, ladite structure primaire du mât d'accrochage comprenant en outre une structure de déport (52) agencée dans le passage pour le flux secondaire, et destinée à relier ladite seconde enveloppe structurale (50) audit élément de l'aéronef,
**caractérisé en ce que** ladite seconde enveloppe structurale (50) intègre un système d'inversion de poussée (75).

2. Ensemble moteur selon la revendication 1, **caractérisé en ce qu'**une jonction entre les première et seconde enveloppes structurales (40,50) se trouve en aval d'une chambre de combustion (42) de la turbomachine.

3. Ensemble moteur selon la revendication 1 ou la revendication 2, **caractérisé en ce qu'**une extrémité aval (50b) de ladite seconde enveloppe se trouve à proximité d'une jonction entre un carter de générateur de gaz (16) de la turbomachine, et un carter d'éjection des gaz (18) de celle-ci.

4. Ensemble moteur selon l'une quelconque des revendications précédentes, **caractérisé en ce que** ladite première et/ou seconde enveloppe structurale est reliée à un carter de générateur de gaz (16) de la turbomachine à l'aide d'une pluralité de bielles (72) réparties circonférentiellement et agencées sensiblement tangentiellement vis-à-vis dudit carter de générateur de gaz.

5. Ensemble moteur selon l'une quelconque des revendications précédentes, **caractérisé en ce que** ladite seconde enveloppe structurale (50) est reliée à un carter de générateur de gaz (16) de la turbomachine, et/ou un carter d'éjection des gaz (18) de celle-ci, par une pluralité de systèmes à ressort précontraint (74) répartis circonférentiellement.

6. Ensemble moteur selon l'une guelcongue des revendications précédentes, **caractérisé en ce que** ladite première enveloppe structurale (40) est trouée par des portes d'accès (66) recouvertes par un ou plusieurs volets (68).

7. Aéronef comprenant au moins un ensemble moteur (1) selon l'une quelconque des revendications précédentes.

8. Aéronef selon la revendication 7. dans lequel ledit élément sur lequel est raccordé le mât d'accrochage de l'ensemble moteur, est l'une de ses ailes (6) ou une partie arrière de son fuselage.

9. Procédé de montage d'une turbomachine à double flux (2) sur un mât d'accrochage (4) d'un ensemble moteur (1) pour aéronef selon l'une quelconque des revendications 1 à 6, ledit procédé comprenant les étapes consistant à :
- installer, de manière amovible, des moyens de guidage (91) sur la seconde enveloppe structurale (50) de la structure primaire (46) du mât d'accrochage (4)
- déplacer la turbomachine à double flux (2) selon la direction de son axe (8), en direction de la seconde enveloppe structurale (50), de manière à ce que sa première enveloppe (40) soit guidée par lesdits moyens de guidage (91) ; et
- retirer lesdits moyens de guidage (91) de la seconde enveloppe structurale (50).

## Patentansprüche

1. Triebwerksystem (1) für ein Luftfahrzeug, umfassend ein Zweistrom-Turbotriebwerk (2) und ein Aufhängesystem (4) für das Turbotriebwerk zur Befestigung an einem Element (6) des Luftfahrzeugs, wobei das Turbotriebwerk ein Fangehäuse (12) sowie ein Zwischengehäuse (14), das stromabwärts des Fangehäuses angebracht ist und eine Nabe (20) umfasst, die Strukturarme (22) trägt, aufweist und das Aufhängesystem eine Primärstruktur (46) zur Passage von Kräften aufweist,
wobei das Turbotriebwerk eine erste Strukturhülle (40) aufweist, die sich von der Nabe (20) des Zwischengehäuses aus stromabwärts erstreckt, wobei diese Hülle (40) an der inneren radialen Begrenzung einer Passage (38) für einen Sekundärstrom (36) des Turbotriebwerks teilnimmt,
wobei die Primärstruktur (46) des Aufhängesystems eine zweite Strukturhülle (50) aufweist, die an der ersten Strukturhülle (40) angebracht ist und sich fortlaufend stromabwärts von dieser befindet, so dass sie auch an der inneren radialen Begrenzung der Passage (38) für den Sekundärstrom teilnimmt, wobei die Primärstruktur des Aufhängesystems ferner eine Abtriebstruktur (52) aufweist, die in der Passage für den Sekundärstrom angeordnet ist und zur Verbindung der zweiten Strukturhülle (50) mit dem Element des Luftfahrzeugs dient,
**dadurch gekennzeichnet, dass** die zweite Strukturhülle (50) ein Schubumkehrsystem (75) integriert aufweist.

2. Triebwerksystem nach Anspruch 1, **dadurch gekennzeichnet, dass** sich eine Verbindung zwischen der ersten und der zweiten Strukturhülle (40, 50) stromabwärts von einer Brennkammer (42) des Turbotriebwerks befindet.

3. Triebwerksystem nach Anspruch 1 oder Anspruch 2, **dadurch gekennzeichnet, dass** sich ein stromabwärtiges Ende (50b) der zweiten Hülle in der Nähe einer Verbindung zwischen einem Gasgeneratorgehäuse (16) des Turbotriebwerks und einem Gasaustrittsgehäuse (18) desselben befindet.

4. Triebwerksystem nach einem der vorhergehenden Ansprüche, **dadurch gekennzeichnet, dass** die erste und/oder die zweite Strukturhülle mit einem Gasgeneratorgehäuse (16) des Turbotriebwerks mittels mehrerer Stangen (72), die am Umfang verteilt sind und im Wesentlichen tangential zu dem Gaserzeugergehäuse angebracht sind, verbunden sind.

5. Triebwerksystem nach einem der vorhergehenden Ansprüche, **dadurch gekennzeichnet, dass** die zweite Strukturhülle (50) mit einem Gasgeneratorgehäuse (16) des Turbotriebwerks und/oder einem Gasaustrittgehäuse (18) desselben über mehrere Spannfedersysteme (74), die am Umfang verteilt sind, verbunden ist.

6. Triebwerksystem nach einem der vorhergehenden Ansprüche, **dadurch gekennzeichnet, dass** die erste Strukturhülle (40) von mehreren Zutrittsöffnungen (66), die von einer oder mehreren Klappen (68) bedeckt sind, durchbrochen ist.

7. Luftfahrzeug, das mindestens ein Triebwerksystem (1) nach einem der vorhergehenden Ansprüche aufweist.

8. Luftfahrzeug nach Anspruch 7, wobei das Element, an dem das Aufhängesystem des Triebwerksystems befestigt ist, eine von dessen Tragflächen (6) oder ein hinterer Teil von dessen Rumpf ist.

9. Verfahren zur Anbringung eines Zweistrom-Turbotriebwerks (2) an einem Aufhängesystem (4) eines Triebwerksystems (1) für ein Luftfahrzeug nach einem der Ansprüche 1 bis 6, wobei das Verfahren die folgenden Schritte aufweist:
- Anbringen von Führungsmitteln (91) an der zweiten Strukturhülle (50) der Primärstruktur (46) des Aufhängesystems (4) in lösbarer Weise
- Verschieben des Zweistrom-Turbotriebwerks (2) in Richtung von dessen Achse (8) in Richtung der zweiten Strukturhülle (50) derart, dass die erste Hülle (40) durch die Führungsmittel (91) geführt wird; und
- Zurückziehen der Führungsmittel (91) von der zweiten Strukturhülle (50).

## Claims

1. An engine assembly (1) for an aircraft including a dual-flow turbomachine (2) and a strut (4) for mounting said turbomachine intended to be connected to an element (6) of the aircraft, where the turbomachine includes a fan casing (12) and also an intermediate casing (14) positioned downstream of the fan casing and including a hub (20) supporting structural arms (22), and where the attachment strut includes a primary structure (46) for transmitting forces,
said turbomachine including a first structural case (40) extending downstream of said hub (20) of the intermediate casing, where this case (40) contributes to the internal radial delimitation of a passage (38) for a secondary flow (36) of the turbomachine,
said primary structure (46) of the attachment strut including a second structural case (50), assembled on said first structural case (40), and positioned directly downstream of the latter, in order that it may also contribute to the internal radial delimitation of the passage (38) for the secondary flow, where said primary structure of the attachment strut also includes an offset structure (52) positioned in the passage for the secondary flow, and intended to connect said second structural case (50) to said aircraft element,
**characterized in that** said second structural case (50) includes a thrust reversal system (75).

2. An engine assembly according to claim 1, **characterised in that** a junction between the first and second structural cases (40, 50) is located downstream of a combustion chamber (42) of the turbomachine.

3. An engine assembly according to claim 1 or claim 2, **characterised in that** a downstream end (50b) of said second case is located close to a junction between a gas generator casing (16) of the turbomachine, and a gas injection casing (18) of the latter.

4. An engine assembly according to any of the previous claims, **characterised in that** said first and/or second structural case is connected to a gas generator casing (16) of the turbomachine using multiple connecting rods (72) distributed circumferentially and positioned roughly tangentially relative to said gas generator casing.

5. An engine assembly according to any of the previous claims, **characterised in that** said second structural case (50) is connected to a gas generator casing (16) of the turbomachine, and/or a gas injection casing (18) of the latter, by multiple preload spring systems (74) distributed circumferentially.

6. An engine assembly according to any of the previous claims, **characterised in that** said first structural case (40) is perforated by access panels (66) covered by one or more shutters (68).

7. An aircraft comprising at least one engine assembly (1) according to any of the previous claims.

8. An aircraft according to claim 7, in which said element to which the attachment strut of the engine assembly is connected is one of its wings (6) or a rear part of its fuselage.

9. A method of assembly of a dual-flow turbomachine on a strut (4) of an engine assembly (1) for an aircraft according to any of the claims 1 to 6, where said method includes the steps consisting in:
- installing, in a removable manner, guide means (91) on the second structural case (50) of the primary structure (46) of strut (4);
- moving the dual-flow turbomachine (2) along the direction of its axis (8), in the direction of the second structural case (50), such that its first case (40) is guided by said guide means (91); and
- removing said guide means (91) from the second structural case (50).
